# EUROPEAN PATENT APPLICATION

(11) **EP 2 077 392 A1**
(43) Date of publication of application: **08.07.2009**
(21) Application number: 08394001.5
(22) Date of filing: 03.01.2008
(51) Int. Cl.: F03D 1/00, F03D 3/00, F03D 9/00, F03D 11/00, F03B 13/10, F03B 13/14, F03B 17/06

(54) **A power generation system**

(71) Applicant: Molloy, Padraig, Co. Galway (IE)
(72) Inventor: Molloy, Padraig, Co. Galway (IE)
(74) Representative: Lucey, Michael

(57) **Abstract**

A system suitable for converting wind and wave energy into movement of a drive train comprises a vessel having a hull adapted to roll freely in response to the wind and waves and a mooring system suitable for connecting the vessel with an anchor, the mooring system adapted to capture the relative movement between the vessel and the anchor in response to the rolling, pitching and/or vertical motion of the vessel in the water, and convert the relative movement into movement of a drive train. The vessel comprises a wind capture system capable of controllably presenting a variable wind heeling load to amplify the hulls rolling motion. The wind capture system is adapted to amplify the hulls rolling motion by increasing the wind heeling load on the hull at a forward point of roll and decreasing the wind heeling load on the hull at an aft point of roll. The wind capture system comprises a system of shutters in which wind heeling load on the hull is varied by opening and closing the shutters.

## Description

### Introduction

The invention relates to a power generation system suitable for converting wind and wave energy into movement of a drive train. In particular, the invention relates to a power generation vessel suitable for converting wind and wave energy into movement of a drive train.

### Statements of Invention

According to the invention, there is provided a power generation system suitable for converting wind and wave energy into movement of a drive train comprising:
- a vessel having a hull adapted to roll freely in response to the wind and waves; and
- a mooring system suitable for connecting the vessel with an anchor, the mooring system adapted to capture the relative movement between the vessel and the anchor in response to the rolling, pitching and/or vertical motion of the vessel in the water, and convert the relative movement into movement of a drive train,
wherein the vessel comprises a wind capture system capable of controllably presenting a variable wind heeling load to amplify the hulls rolling motion. In this manner, the hull rolling motion is amplified so as to amplify the relative motion between the vessel and the anchor, which increases the movement of the drive train.

Suitably, the wind capture system is adapted to amplify the hulls rolling motion by increasing the wind heeling load on the hull at a forward point of roll and decreasing the wind heeling load on the hull at an aft point of roll. The term "forward point of roll" should be understood to mean that position when the vessel is heeling to windward. The term "aft point of roll" should be understood to mean that position when the vessel is heeling to leeward. Generally, the variation of the wind loading on the hull is synchronised with the rolling of the hull. Various means of providing such synchronisation will be apparent to those skilled in the art. Thus, in one embodiment, the wind capture system is operatively connected to the mooring system or the drive train such that the variation in captured wind heeling load on the hull is synchronised with the rolling of the hull.

In one embodiment, the wind capture system comprises a system of shutters in which wind heeling load on the hull is varied by opening and closing the shutters. Typically, the system of shutters is mounted on a mast. Ideally, the vessel comprises a plurality of shutter systems, each suitably mounted on a separate mast. As such, when a system of shutters mounted on a mast is employed, the mast (including the shutter system) may be rotatable with respect to the vessel, or the system of shutters may be rotatable on the mast. Either way, the system of shutters may be rotated into a favourable orientation with respect to the wind direction.

In a preferred embodiment, the mooring system includes tensioning means for maintaining a tension on the mooring system as the vessel rises and falls in the water.

In one embodiment, the mooring system comprises a cable system comprising at least one cable operatively connected to the vessel and adapted for being fixed at least one end to the anchor, whereby the motion of the hull with respect to the cable actuates the drive train. Generally, the motion captured will be rolling and vertical movement, however other motion such as pitching will also be captured. Suitably, at least one cable is directly connected to the vessel and is adapted to be restrained at each end by the anchor. Thus, in this manner the cable loops over the vessel and interacts directly with the drive train. In another embodiment, the at least one cable is indirectly connected to the vessel through an intermediate connecting mechanism connecting the at least one cable and the drive train. Various types of intermediate connecting mechanism will be apparent to those skilled in the art such as, for example, a lever linkage and a four-bar linkage. Ideally, the cable system is operatively connected to a cable tensioning means to maintain tension on the pulley as the vessel rises and falls. In one embodiment, the cable tensioning means comprises a cable flywheel which is movable and biased to take up tension in the pulley as a vessel falls, the flywheel typically being operatively connected to an energy capture and storage means to capture and store energy released as the flywheel moves. Various types of energy capture and storage means are envisaged such as, for example, a hydraulic cylinder, a pneumatic cylinder, and a linear drive mechanism.

In one embodiment, the energy capture and storage means is operatively connected to a drive train, typically the main drive train of the system.

Suitably, the cable flywheel is biased by virtue of a weight or spring system.

In a preferred embodiment, the mooring system comprises at least two cable systems. Suitably, the drive train is mounted in the vessel intermediate the at least two cable systems.

In a preferred embodiment of the invention, the system comprises an anchor which is suitably fixed with respect to the vessel. Typically, the anchor comprises a riser fixed to the sea bed and optionally fixed to the mooring system through a swivel adapted to swivel in response to orientation of the vessel in the water. Ideally, the mooring system tethers the vessel to the anchor at four corners of the vessel.

In one embodiment, the mooring system is adapted to bias the hull of the vessel into an orientation where it is beam-on to the wind.

Ideally, a section of a part of the hull intended to be underwater is semi-circular. However, other designs of hull which minimise resistance to rolling will be apparent to the skilled person. Suitably, the profile of the hull is half-cylindrical.

In one embodiment of the invention, the mooring system and/or the drive train comprise overload protection means to prevent an overload of power being transmitted between or along the mooring system and the drive train. Various types of spring or hydraulic dampening systems may be employed to provide power overload protection, the details of which will be well known to those skilled in the art.

In a particularly preferred embodiment, the invention relates to a system for converting wind and wave energy into electricity comprising a system according to the invention, and further comprising an electricity generator operatively connected to the drive train.
Typically, the system includes electrical power transmission means for transmitting electrical power from the vessel. Suitably, the electrical power transmission means comprises a cable and electrical slip ring assembly.

The invention also relates to a vessel suitable for forming part of the power generation system of the invention and comprising a vessel having a hull shaped to roll freely in response to the action of the wind and waves, and a wind capture system capable of controllably presenting a variable wind heeling load to amplify the hulls rolling motion.

Ideally, the wind capture system comprises wind heeling load variation means to amplify the hulls rolling motion by increasing wind heeling load on the hull at a forward point of roll and decreasing wind heeling load on the hull at an a leeward point of roll.

Typically, the wind capture system is operatively connected to the mooring system or the drive train such that the changes in wind heeling load on the hull are synchronised with the rolling of the hull.

In one embodiment, the wind capture system comprises a system of shutters in which wind heeling load on the hull is varied by opening and closing the shutters. Suitably, system of shutters is mounted on a mast, wherein the vessel ideally comprises a plurality of shutter systems, each mounted on a mast.

In one embodiment, the wind capture system is rotatable with respect to the vessel.

Suitably, the vessel further includes a mooring system adapted for connecting the vessel with a fixed anchor, the mooring system adapted to capture the relative movement between the vessel and the anchor in response to the rolling, pitching and/or vertical motion of the vessel in the water and convert the relative movement into movement of a drive train.

The invention also relates to a method of generating electricity comprising a step of positioning an electricity generation system according to the invention in a body of water exposed to wind and wave motion, and converting the wind and wave energy into electricity.

### Brief Description of the Figures

The invention will be more clearly understood from the following description of some embodiment thereof, given by way of example only, with reference to the accompanying figures in which:
FIG. 1 illustrates an isometric projection of a power generation system according to a first embodiment of the invention;
FIG. 2 illustrates an isometric projection of the power generation system of Figure 1;
FIG. 3 illustrates a simplified two-view projection the power generation system of Figure 1;
FIG. 4 illustrates a longitudinal axis cut down section-view of the power generation system of Figure 1
FIG. 5 illustrates an isometric projection of a power generation system according to an alternative embodiment of the invention; and
FIG. 6 illustrates a simplified three-view projection of the power generation system of Figure 5.

### Detailed Description of the Invention

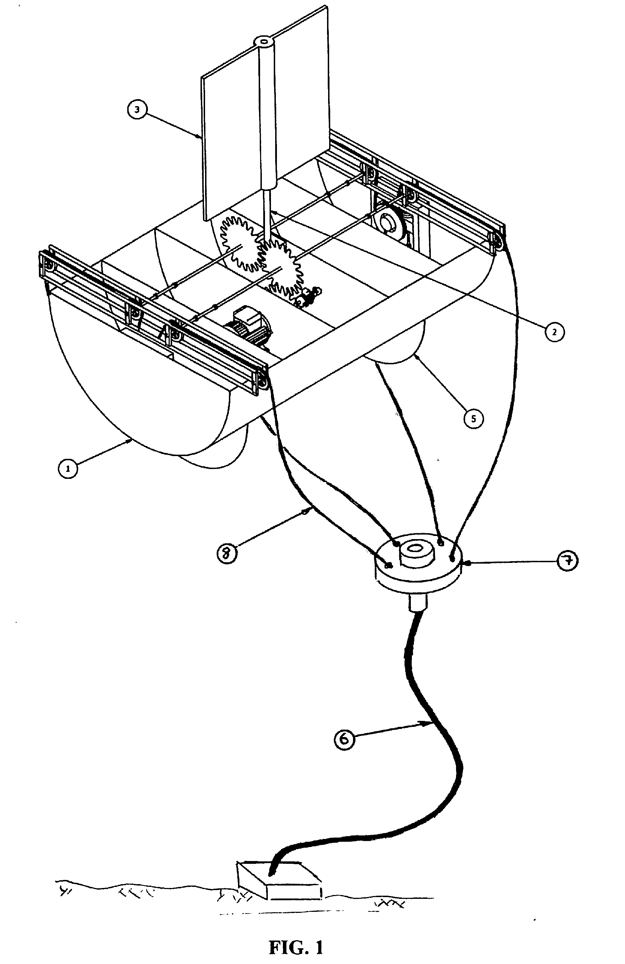

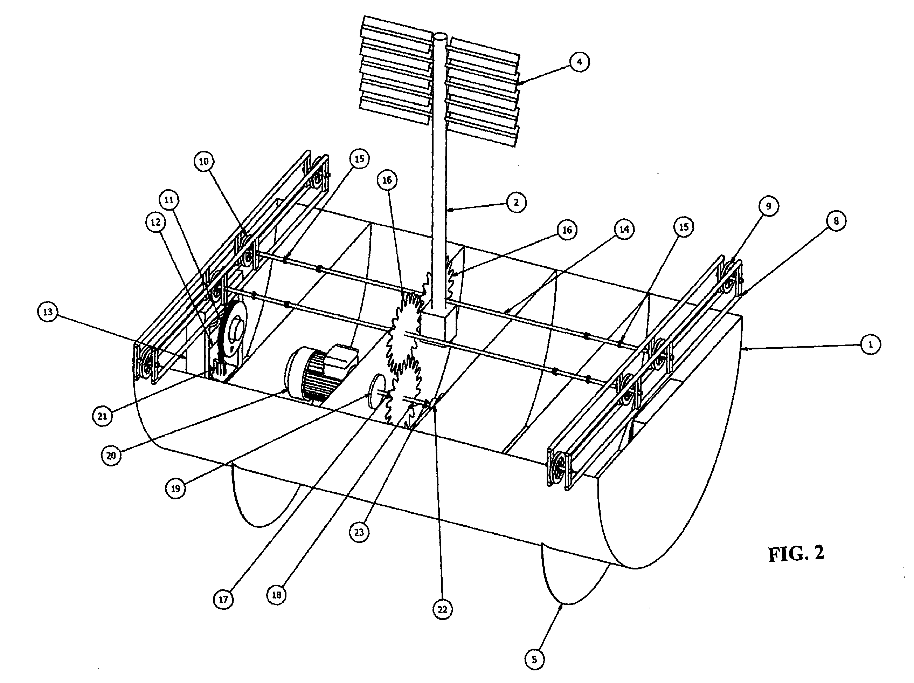

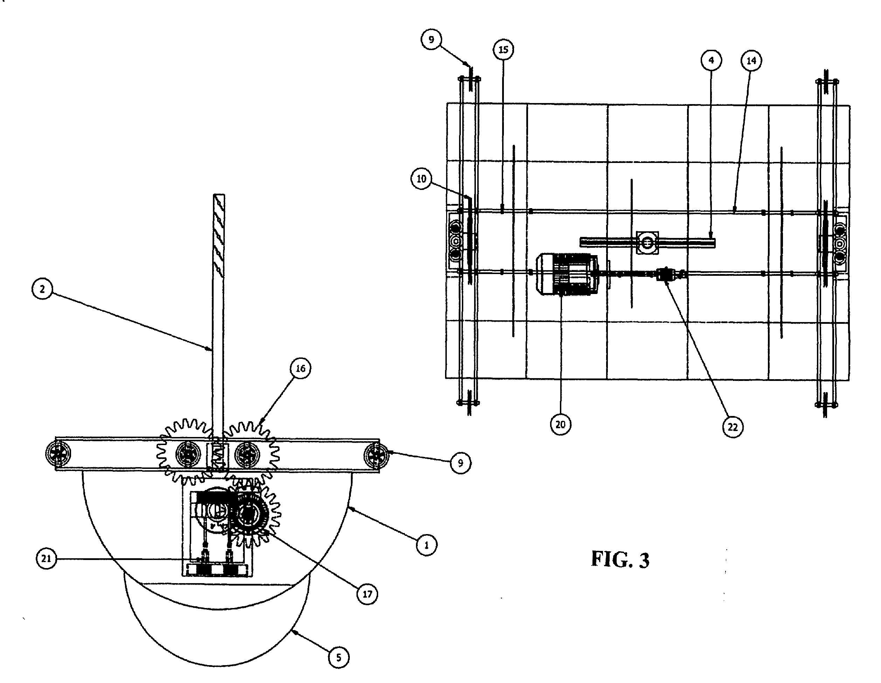

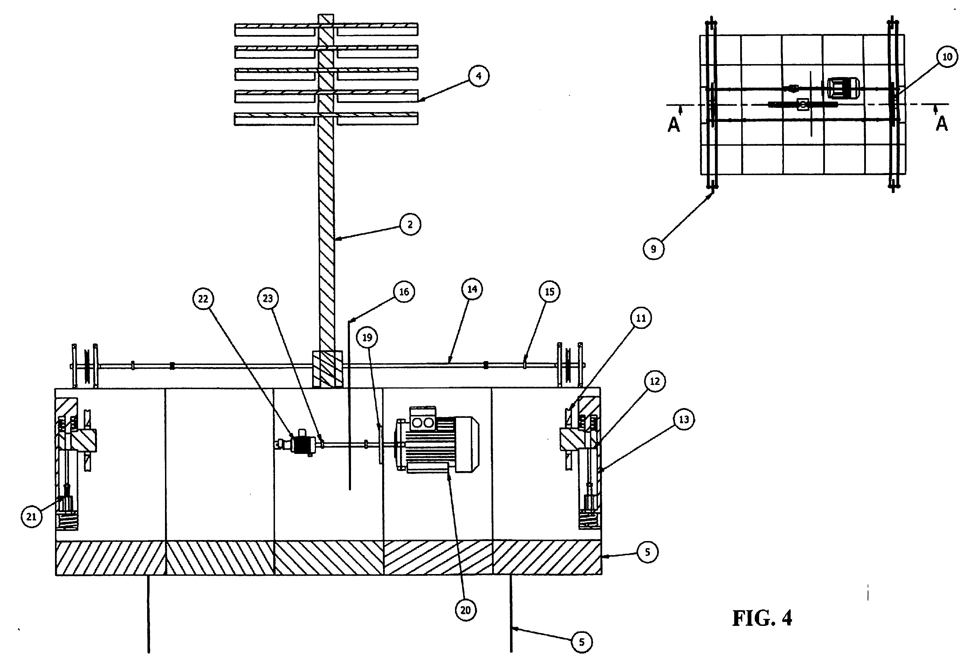

A system for the conversion of wave and wind energy to electrical power. As in Fig 1, comprising a hull (1) on which is mounted one or more masts or structures (2) on which in turn is mounted a rotational wind capture element or sail capable of rotating about the vertical axis on the mast (3), or is mounted on the mast a wind capture device consisting of multiple slats (mounted either horizontally or vertically) capable of being opened or closed (4) (as in Fig. 2, Fig 3 and Fig. 4). The hull is designed to lie abeam of the seas and at right angles to the prevailing wind. It is designed such that internal and external masses (5) act as counterweights to the rigs heeling influence and provide a righting moment to the vessel. The wind capture system is used to maximise the hulls rolling motion by maximising wind heeling load at the forward or windward point of roll of the vessel (into the wind/waves) and maintaining that wind loading as the vessel rolls away from the wind. The wind capture system minimises wind heeling load at the leeward or aft point of roll (vessel is rolled away from the wind) and maintains that minimised wind loading as the vessel rolls to windward. By operating the wind capture system in phase with rolling motion caused by wave action on the hull of the vessel, the vessel's angle of roll is thereby amplified. The energy released by the wind and waves causing the rolling motion of the vessel and also its vertical motion, rise and fall, are captured by the vessel's mooring system and an associated onboard drive train. The anchoring system comprises a single riser (6) running from a seabed anchor to a swivel (7) above which point a system of multiple cables (8) runs up towards the vessel. In Embodiment 1 as shown in Fig 1, two cables are looped and held at the swivel (7) but in other embodiments more than two cables may be used. In Embodiment 1 the cables (8) come inboard by running first over an outboard pulley (9) at each corner of the vessel and then over an inboard pulley (10) before looping under a pulley (11) attached via bearings to a weight (12) that can slide vertically in a linear slide (13) under the influence of varying cable tension. In the embodiment shown the cables motion relative to the vessels as it rolls, rises and falls causes the inboard pulleys (10) to rotate and the weight (12) to move. The rotational motion of the pulleys (10) is used to drive a generator via a drive train consisting of shafts, clutches, flywheels, gearboxes, and bearings (not shown). In the embodiment shown this drive train is shown schematically in its most basic form and additional complexity would be inherent in a final design. In Embodiment 1 the inboard pulleys (10) are integral with and provide a torque to the upper drive shafts (14). Clutches, sprag clutches or ratchet elements (15) split the drive shaft (14) so as to convert intermittent reciprocating rotary motion at the inboard pulleys (10) to unidirectional but intermittent rotational motion at the upper drive shaft gears (16). In the embodiment depicted the upper shaft gears and lower shaft gear (17) combine to form a simple gear train driving the lower or main drive shaft (18) which in turn drives a flywheel (19) and generator (20).

Additional power is captured from the moving weight system (11) and is transferred to the main drive shaft (18) for transmission to the generator by means of a hydraulic system. In Embodiment 1 the variation in cable tension caused by the vessels rise and fall is taken up by a moving weight (12) as it slides in the linear slide system (13). As the vessels drops into a trough between the waves cable tension is reduced and the weight is lowered. As the vessel rises on a wave the cable tension is increased and the weight rises. The energy released by the movement of the weight is captured by a hydraulic cylinder (21). The cylinder is connected to a hydraulic motor (22) via a hydraulic pressure storage and hydraulic power transmission system. The hydraulic motor (22) is used to drive the main shaft (18) as required. A ratchet or clutch mechanism (23) between hydraulic motor (22) and shaft (18) is used to engage/disengage the hydraulic drive as required.

Electrical power is fed from the vessel via a heavy duty electrical slip ring with the electrical cable running through the centre of the swivel (7) as per existing rotary unions used in offshore oil sector technology.

### Other embodiments of the above system are:

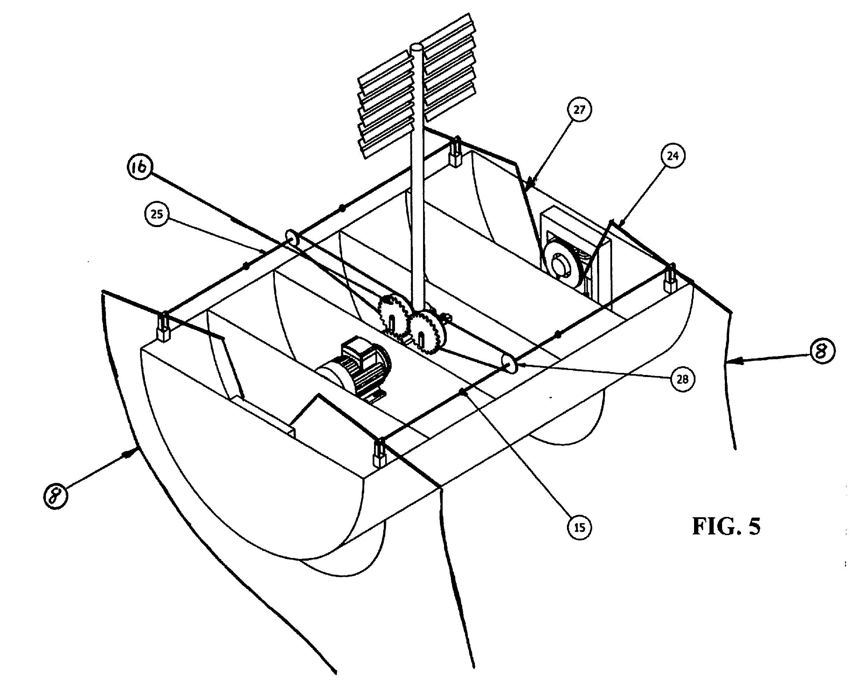

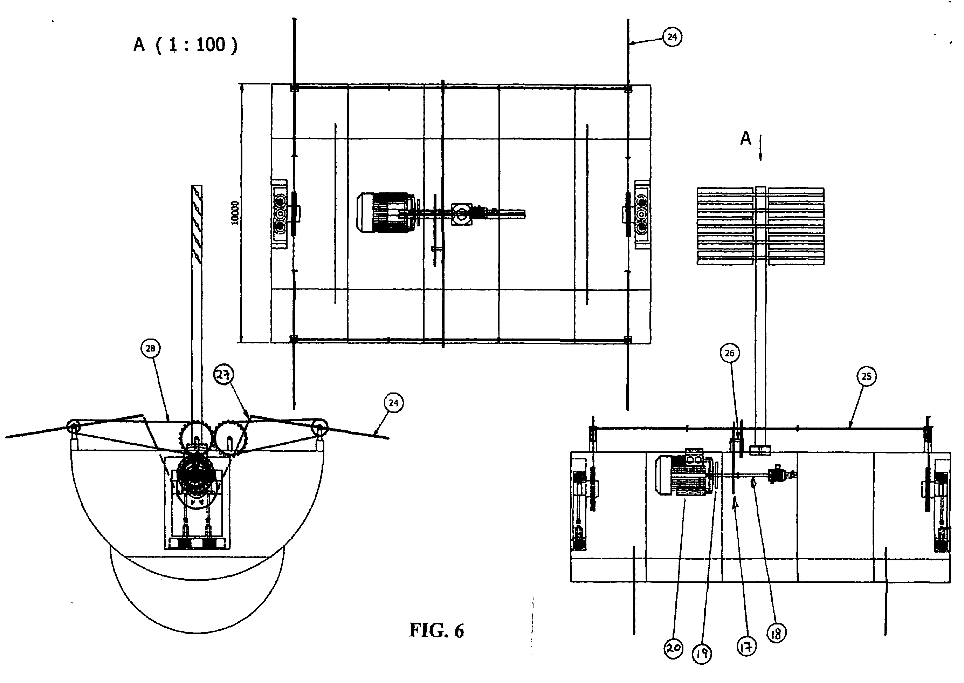

In another embodiment of the vessel (Fig. 5 and Fig. 6) the mooring system cables are not brought on board via roller drive system but instead the cables are connected to linkage elements (24) and the motion of the vessel is transmitted to the power generation drive trains via these linkages. Suitable linkages such as lever type or four-bar linkages can be used to connect each cable to the onboard drive train and thence to convert vessel roll, rise and fall to rotational motion in the generator drive shaft. In the embodiment shown in Fig. 5 a lever type linkage (24) is used eliminate the requirement to bring the cables onboard as in Embodiment 1. The lever is integral with the upper shaft (25) and causes it to rotate in a reciprocal manner as the upper shaft (14) in Embodiment 1. The drive train is similar to the previous embodiment in that clutches, sprag clutches or ratchet elements (15) in the drive shaft (25) convert intermittent reciprocating rotary to unidirectional but intermittent rotational motion. A chain or belt drive (28) is used to connect the external shaft (25) with the inner upper shaft (26) (see Fig. 6). The inner upper shaft gears are similar to gears (16) in embodiment 1 and combine with each other and lower shaft gear (17) to form a simple gear train driving the lower or main drive shaft (18) which in turn drives a flywheel (19) and generator (20). As in Embodiment 1 the inboard end of the lever element in Embodiment 2 is connected to a chain or cable (27) that is used to raise or lower the weight (12) and thereby transfer power via the hydraulic system to the generator.

In other embodiments a rack and pinion, power screw, ballscrew, or some other form of linear drive may be used to convert linear movement of weights directly to rotational motion and thence provide rotational drive to an electrical generator without using a hydraulic system of power transmission.

In other embodiments springs are used in conjunction with weights, or on their own, as the energy storage medium for vertical displacement of the vessel. A spring and hydraulic system and/or spring and linear drive system are used in place of, or in conjunction with, a system of weights to capture energy associated with rise and fall motion of the hull.

Other embodiments may use multiple generators with the power captured from vessel vertical motion being used to drive generators other than the generator(s) used to capture power from the vessel's rolling motion.

| **Item** | **No.** |
|---|---|
| Hull | 1 |
| Mast | 2 |
| Vertical Axis Rotational Wind Capture Element | 3 |
| Horizontal Axis Rotational Wind Capture Element | 4 |
| External counterweight/keel | 5 |
| Single riser mooring component | 6 |
| Mooring System Swivel | 7 |
| Cables above swivel | 8 |
| Outboard pulley | 9 |
| Inboard pulley | 10 |
| Weight pulley | 11 |
| Weight | 12 |
| Weight linear slide | 13 |
| Upper drive shaft | 14 |
| Upper drive shaft clutch, sprag clutch or ratchet mechanism | 15 |
| Upper drive shaft gears | 16 |
| Lower drive shaft gear | 17 |
| Lower/main drive shaft | 18 |
| Flywheel | 19 |
| Generator | 20 |
| Hydraulic cylinder for weight movement energy capture | 21 |
| Hydraulic motor | 22 |
| Ratchet/clutch between hydraulic motor & main shaft | 23 |
| Lever linkage 2^{nd} embodiment | 24 |
| Upper outer shaft 2^{nd} embodiment | 25 |
| Upper inner shaft 2^{nd} embodiment | 26 |
| Weight cable or chain 2^{nd} embodiment | 27 |
| Chain/belt drive connecting outer to inner upper shafts 2^{nd} embodiment | 28 |

The invention is not limited to the embodiments hereinbefore described which may be varied in construction and detail without departing from the spirit of the invention.

## Claims

1. A system suitable for converting wind and wave energy into movement of a drive train comprising:
- a vessel having a hull adapted to roll freely in response to the wind and waves; and
- a mooring system suitable for connecting the vessel with an anchor, the mooring system adapted to capture the relative movement between the vessel and the anchor in response to the rolling, pitching and/or vertical motion of the vessel in the water, and convert the relative movement into movement of a drive train,
wherein the vessel comprises a wind capture system capable of controllably presenting a variable wind heeling load to amplify the hulls rolling motion.

2. A system as claimed in Claim 1 in which the wind capture system is adapted to amplify the hulls rolling motion by increasing the wind heeling load on the hull at a forward point of roll and decreasing the wind heeling load on the hull at an aft point of roll.

3. A system as claimed in Claim 2 in which the wind capture system is operatively connected to the mooring system or the drive train such that the variation in captured wind heeling load on the hull is synchronised with the rolling of the hull.

4. A system as claimed in any preceding Claim in which wind capture system comprises a system of shutters in which wind heeling load on the hull is varied by opening and closing the shutters.

5. A system as claimed in any preceding Claim in which the mooring system comprises a cable system comprising at least one cable operatively connected to the vessel and adapted for being fixed at at least one end to the anchor, whereby rolling, pitching and/or vertical motion of the hull with respect to the cable actuates the drive train.

6. A system as claimed in Claim 6 in which the cable system is operatively connected to a cable tensioning means to maintain tension on the pulley as the vessel rises and falls.

7. A system suitable for converting wind and wave energy into electricity comprising a system as claimed in any of Claims 1 to 6, and further comprising an electricity generator operatively connected to the drive train.

8. A vessel suitable for forming part of the system of any preceding Claim and comprising a vessel having a hull shaped to roll freely in response to the action of the wind and waves, and a wind capture system capable of controllably presenting a variable wind heeling load to amplify the hulls rolling motion.

9. A vessel as claimed in Claim 8 in which the wind capture system comprises wind heeling load variation means to amplify the hulls rolling motion by increasing wind heeling load on the hull at a forward point of roll and decreasing wind heeling load on the hull at an aft point of roll.

10. A method of generating electricity comprising a step of positioning a system according to any of Claims 1 to 7 in a body of water exposed to wind and wave motion, and converting the wind and wave energy into electricity.
